# EUROPÄISCHE PATENTSCHRIFT

(11) **EP 1 747 109 B1**
(45) Veröffentlichungstag und Bekanntmachung des Hinweises auf die Patenterteilung: **26.11.2008**
(21) Anmeldenummer: 05742956.5
(22) Anmeldetag: 04.05.2005
(51) Int. Cl.: B60H 1/34

(54) **LUFTAUSSTRÖMER, INSBESONDERE FÜR EIN KRAFTFAHRZEUG**
AIR OUTLET IN PARTICULAR FOR A MOTOR VEHICLE
EJECTEUR D'AIR, NOTAMMENT POUR AUTOMOBILE

(30) Priorität: 10.05.2004 DE 102004023495
(43) Veröffentlichungstag der Anmeldung: 31.01.2007
(73) Patentinhaber: Behr GmbH & Co. KG, 70469 Stuttgart (DE)
(72) Erfinder: KÜHNEL, Wolfram, 70374 Stuttgart (DE)
(86) Internationale Anmeldenummer: PCT/EP2005/004853
(87) Internationale Veröffentlichungsnummer: WO 2005/110785

(56) Entgegenhaltungen:
- EP-A- 0 936 091
- EP-A- 1 223 061
- EP-A- 1 332 899
- DE-A1- 1 778 267
- DE-A1- 3 542 389

## Beschreibung

Die Erfindung betrifft einen Luftausströmer, insbesondere für ein Kraftfahrzeug, gemäß dem Oberbegriff des Anspruchs 1.

Bei Kraftfahrzeugen wird häufig die Zuführung von konditionierter Luft in den Fahrzeuginnenraum von den Insassen als unangenehm empfunden, wenn die Zuführung in Form eines konzentrierten Strahls erfolgt, welcher auf den Körper trifft. Dies ist verstärkt bei beengten Raumverhältnissen im Fahrzeuginnenraum der Fall.

Um einen konzentrierten Strahl zu vermeiden, ist bekannt, eine große Vielzahl von kleinen Ausströmöffnungen beispielsweise in der Mittelkonsole, im Dach oder in den B-/C-Säulen vorzusehen. Derartige Ausströmöffnungen sind insbesondere in öffentlichen Verkehrsmitteln, wie Bussen, Eisenbahnwaggons oder Flugzeugen, verbreitet. Jedoch ist das Vorsehen einer Vielzahl von Ausströmöffnungen relativ aufwendig.

Aus der EP 1 223 061 A2 ist ein Luftausströmer bekannt, insbesondere zur Fahrzeugklimatisierung, mit einem Rahmen, mehreren Lamellen, die um eine erste Achse verschwenkbar angeordnet sind, und mindestens einem Koppelelement, mit dem jede der Lamellen gekoppelt ist, wobei das Koppelelement relativ zur ersten Achse zwischen einer Neutralstellung, in der die Lamellen zueinander parallel sind, und einer Komfortstellung verstellbar sind, in der mindestens ein Teil der Lamellen in zueinander entgegengesetzter Richtung verschwenkbar ist.

Der Luftausströmer ist vor einem Luftkanal angeordnet, aus dem ein Luftstrom austritt, dessen Richtung mit Hilfe des Luftausströmers eingestellt werden kann. Dabei kann der Luftstrom mit Hilfe der zueinander entgegengesetzt verschwenkten Lamellen aufgefächert werden, so dass ein divergierender Luftstrom erzeugt wird, in welchem geringere Strömungsgeschwindigkeiten herrschen als bei einem Luftstrom mit konstantem Querschnitt, so dass auch bei einem hohen Luftdurchsatz verhindert werden kann, dass der austretende Luftstrom mit hohen Geschwindigkeiten auf einen Fahrzeuginsassen auftrifft. Ein derartiger Luftausströmer lässt jedoch noch Wünsche offen.

Aus der DE 1778267 ist ein Luftausströmer gemäß dem Oberbegriff des Anspruchs 1 bekannt.

Es ist Aufgabe der Erfindung, einen verbesserten, insbesondere kostengünstigeren Luftausströmer zur Verfügung zu stellen, der für einen möglichst hohen Komfort im Fahrzeuginnenraum in Folge seiner Ausströmcharakteristik sorgt.

Diese Aufgabe wird gelöst durch einen Luftausströmer mit den Merkmalen des Anspruchs 1. Vorfieilhafte Ausgestaltungen sind Gegenstand der Unteransprüche.

Erfindungsgemäß ist ein Luftausströmer, insbesondere für ein Kraftfahrzeug, mit mindestens einem in einem Strömungskanal angeordneten Luftleitelement vorgesehen, das dem Luftstrom bei Eintritt aus einem Luftkanal in den Luftausströmer einen Drall auferlegt, wobei entlang der Mittellängsachse des Strömungskanals ein Strömungskörper ausgebildet ist. Der Strömungskörper ist bevorzugt massiv mit einem kreisförmigen Querschnitt ausgebildet, jedoch kann der Strömungskörper aus Gewichts- und Materialersparnisgründen hohl ausgebildet sein, wobei er jedoch nicht vom Luftstrom durchströmt wird. Dabei erfolgt durch den Luftausströmer eine sehr großflächige Verteilung der Luft, so dass es nicht oder nur minimal zu Zugerscheinungen kommt.

Besonders vorteilhaft ist eine Anordnung eines derartigen Luftausströmers kurz nach einem Krümmer, da hierbei ohne eine Drallbehaftung des Luftstroms ein sehr unregelmäßiges Strömungsprofil im Luftausströmer vorliegt, und es daher zu einem Zugeffekt kommt, welcher durch die Drallbehaftung nahezu oder vollständig beseitigt werden kann. Somit kann ein derartiger Luftausströmer vielseitiger verwendet werden, da auch bei einer ungünstigen Positionierung des Luftausströmers, beispielsweise kurz nach einem Krümmer, ein Zugeffekt vermieden oder zumindest minimiert werden kann, wodurch der Komfort erheblich gesteigert wird.

Zur Optimierung der Verwirbelung des Luftstroms beim Luftaustritt aus dem Luftausströmer weist der Strömungskörper und/oder der Strömungskanal in dem der Strömungskörper angeordnet ist, einen in Längsrichtung des Strömungskanals sich über die Längsrichtung ändernden Querschnitt auf.

Bevorzugt ist das im Luftausströmer angeordnete Luftleitelement wendelförmig ausgebildet. Dabei können auch mehrere wendelförmig ausgebildete Luftleitelemente vorgesehen sein, welche in äquidistanten Abständen zueinander angeordnet sind und in Art eines mehrgängigen Gewindes verlaufen.

Bevorzugt ist die Ganghöhe des oder der Luftleitelemente konstant, jedoch kann sich die Ganghöhe insbesondere im Lufteintrittsbereich in den Luftausströmer oder im Austrittsbereich desselben verändern. So kann insbesondere die Ganghöhe im Eintrittsbereich größer als im Austrittsbereich sein. In einer weiteren vorteilhaften Ausgestaltung eines Luftausströmers, weist dieser eine in Strömungsrichtung abnehmende oder zunehmende Ganghöhe des oder der Luftleitelemente auf. Durch die Querschnittsveränderung im Strömungsweg und die daraus resultierende Beschleunigung oder Verzögerung der Strömung, lässt sich der Drall der Strömung beeinflussen.

Zur Erhöhung des Komforts für die Insassen weist der Luftausströmer bevorzugt eine Richtungseinstellvorrichtung auf, so dass der diffus aus dem Luftausströmer austretende Luftstrom in seiner mittleren Strömungsrichtung einstellbar ist.

Bevorzugt weist der Luftausströmer mit Richtungseinstellvorrichtung einen äußeren Strömungskanal auf, wobei die Richtungseinstellvorrichtung in dem äußeren Strömungskanal angeordnet ist. Dabei ist vorzugsweise in der Richtungseinstellvorrichtung entlang der Mittellängsachse des inneren Strömungskanals der Strömungskörper ausgebildet. Um den Strömungskörper ist bevorzugt das Luftleitelement zur Drallerzeugung wendelförmig angeordnet.

Der äußere Strömungskanal weist vorzugsweise einen sich in Luftströmungsrichtung gesehen erweiternden Querschnitt auf, wodurch das diffuse Ausströmen des Luftstroms unterstützt wird.

Vorzugsweise sind alle Schwenkachsen der Richtungseinstellvorrichtung mittig bezüglich der Längserstreckung des inneren Strömungskanal angeordnet. Jedoch kann es insbesondere bei größeren Verstellwinkeln sinnvoll sein, diesen Punkt entgegen der Richtung des Luftstroms zu versetzen.

Im Folgenden wird die Erfindung anhand von einem Ausführungsbeispiel, teilweise unter Bezugnahme auf die Zeichnung, im Einzelnen erläutert. In der Zeichnung zeigen:

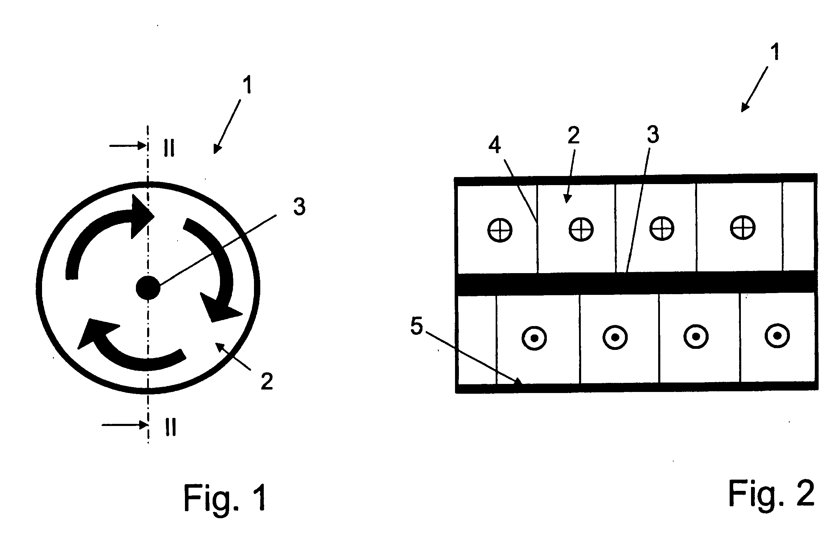

- Fig. 1: eine schematische Darstellung des Querschnitts eines Luftausströmers gemäß einem nicht erfindungsgemäßen Ausführungsbeispiel,
- Fig. 2: einen Schnitt entlang Linie II-II in Fig. 1,
- Fig. 3: eine schematische Darstellung des Querschnitts eines Luftausströmers gemäß einem nicht erfindungsgemäßen Ausführungsbeispiel,
- Fig. 4: einen Schnitt entlang Linie IV-IV in Fig. 3,

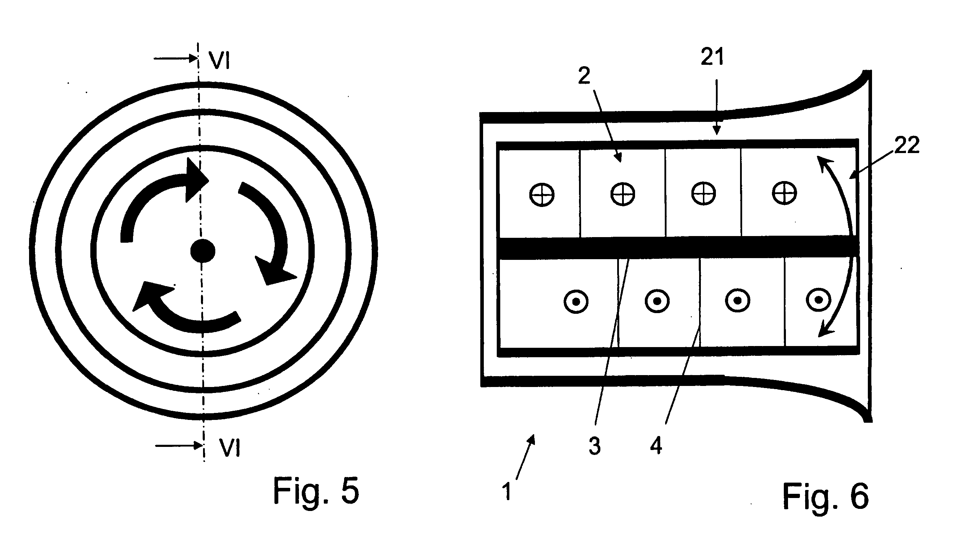

- Fig. 5: eine schematische Darstellung des Querschnitts eines Luftausströmers gemäß dem Ausführungsbeispiel der Erfindung, und
- Fig. 6: einen Schnitt entlang Linie VI-VI in Fig. 5.

Ein Luftausströmer 1 mittels welchem konditionierte, von einer Klimaanlage kommende Luft mit einem Drall versehen einem Fahrzeuginnenraum zugeführt wird, weist in seinem Drallbereich einen Strömungskanal 2 mit kreisförmigem Querschnitt auf, der in seiner Mittellängsachse einen Strömungskörper 3 mit einem Leitelement 4 aufweist. Der massiv ausgebildete Strömungskörper 3 weist einen kreisförmigen Querschnitt auf und das Leitelement 4 erstreckt sich in radialer Richtung wendelförmig mit konstanter Ganghöhe zwischen Strömungskörper 3 und Innenmantelfläche 5 des Strömungskanals 2.

Die über einen Luftkanal (nicht dargestellt) dem Luftausströmer 1 zugeführte Luft, wird durch das Leitelement 4 in eine Art Schraubbewegung gezwungen, so dass der Luftstrom mit einem Drall und somit diffus in den Fahrzeuginnenraum gelangt. Auf Grund des Fehlens eines Spotstrahls wird, auch wenn der Luftstrom auf einen Insassen trifft, der diffuse Luftstrom nicht als unangenehm empfunden.

Gemäß einer Variante, die nicht in der Zeichnung dargestellt ist, weist der Luftausströmer zwei Leitelemente auf, welche jeweils entsprechend dem Luftleitelement 4 des ersten Ausführungsbeispiels ausgebildet, aber um 180° versetzt zueinander angeordnet sind.

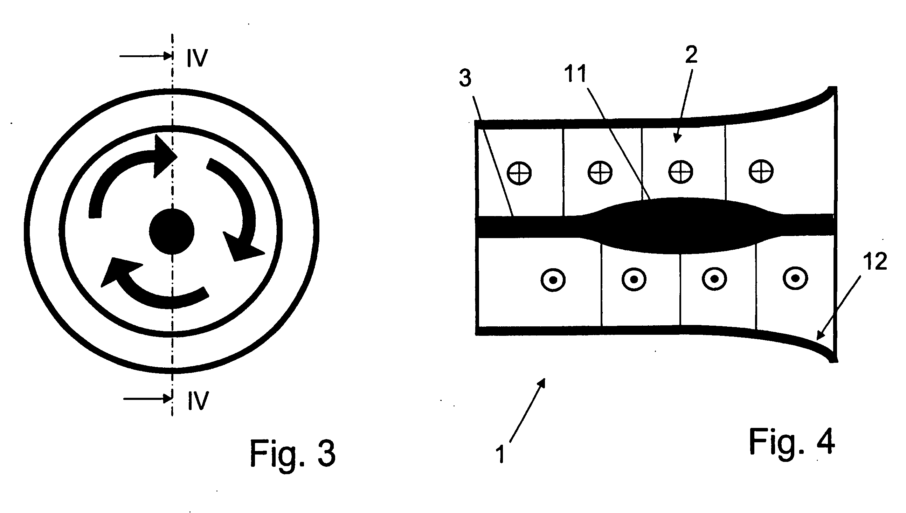

Die Figuren 3 und 4 zeigen ein zweites nicht erfindungsgemäßes Ausführungsbeispiel, gemäß dem ein Luftausströmer 1 vorgesehen ist, dessen Strömungskörper 3 und Strömungskanal 2 in ihrer Form von denen des ersten Ausführungsbeispiels abweichen. Der massive Strömungskörper 3 sowie der Strömungskanal 2 weisen eine von der Zylinderform abweichende Kontur auf, welche die Ausströmcharakteristik des Luftstroms beeinflusst, so dass eine Optimierung der Drallbehaftung erfolgt. Vorliegend weist der Strömungskörper 3 eine stromlinienförmige Verdickung 11 in einem Bereich vor dem Ausströmbereich und der Strömungskanal 2 eine Erweiterung 12 im Ausströmbereich auf.

Gemäß einer Variante, die nicht in der Zeichnung dargestellt ist, weist der Strömungskörper im Ausströmbereich eine Verdickung auf, die etwa der Durchmesservergrößerung des Strömungskanals im Austrittsbereich entspricht, welche entsprechend dem zweiten Ausführungsbeispiel verläuft. Die Strömungsquerschnittserweiterung mit leichter Umlenkung nach außen (und nach Verlassen des Strömungskanals nach innen) im Austrittsbereich des Luftausströmers trägt hierbei zur Verwirbelung und somit zu einem möglichst diffusen Luftströmungsaustritt bei.

Der Luftausströmer 1 gemäß dem Ausführungsbeispiel der Erfindung ist zweiteilig ausgebildet. Dabei weist der Luftausströmer 1 einen äußeren Strömungskanal 21, welcher sich zu seinem in Luftströmungsrichtung liegenden Ende erweitert, und eine Richtungseinstellvorrichtung 22 auf. Die Form der Richtungseinstellvorrichtung 22 entspricht im Wesentlichen der des Luftausströmers 1, das heißt sie weist einen inneren Strömungskanal 2 mit kreisförmigem Querschnitt, einen in der Mittellängsachse des Strömungskanals 2 verlaufenden Strömungskörper 3 und ein Leitelement 4 auf, wobei dieser innere Strömungskanal 2 mit Strömungskörper 3 und Leitelement 4 verschwenkbar in einem kleinen Winkel in beliebige Richtungen in dem äußeren Strömungskanal 21 gelagert ist, so dass der diffus austretende Luftstrom in seiner Hauptaustrittsrichtung in einem gewissen Winkelbereich einstellbar ist. Dabei ist die Richtungseinstellvorrichtung 22 gemäß dem Ausführungsbeispiel der Erfindung derart ausgebildet, dass der innere Strömungskanal 3 in seiner Mitte gelagert ist, so dass bei einer beliebigen Schwenkbewegung die zugehörige Schwenkachse durch diesen Mittelpunkt verläuft.

Ein Luftausströmer gemäß dem oben beschriebenen Ausführungsbeispiel ist insbesondere für beengte Verhältnisse geeignet, in denen eine Luftzuführung in den Fahrzeuginnenraum ohne einen Zug bei der Gefahr des direkten Auftreffens auf einen Insassen erforderlich ist. So kommen insbesondere Luftausströmer in den B-/C-Säulen in Frage, jedoch kann ein derartiger Luftausströmer auch an beliebigen anderen Positionen in einem Fahrzeug, Flugzeug, Schiff oder einem beliebigen klimatisieren Raum verwendet werden.

Zur Regelung des Luftstroms kann vor dem Luftausströmer eine Klappe angeordnet sein, die mittels einer im Fahrzeuginnenraum angeordneten Bedienvorrichtung betätigt werden kann. Die Klappe kann in ihrer einfachsten Form nur eine Auf- und eine Zu-Stellung haben, in ihrer kompliziertesten Ausgestaltung kann eine stufenlose Einstellung des Luftstroms vorgesehen sein.

### Bezugszeichenliste

- 1: Luftausströmer
- 2: Strömungskanal
- 3: Strömungskörper
- 4: Leitelement
- 5: Innenmantelfläche
- 11: Verdickung
- 12: Erweiterung
- 21: äußerer Strömungskanal
- 22: Richtungseinstellvorrichtung

## Patentansprüche

1. Luftausströmer, insbesondere für ein Kraftfahrzeug, mit mindestens einem in einem Strömungskanal (2) angeordneten Luftleitelement (4), das dem Luftstrom bei Eintritt aus einem Luftkanal in den Luftausströmer (1) einen Drall auferlegt, wobei entlang der Mittellängsachse des Strömungskanals (2) ein Strömungskörper (3) ausgebildet ist, **dadurch gekennzeichnet, dass** der Luftausströmer (1) eine Richtungseinstellvorrichtung (22) aufweist, wobei die Richtungseinstellvorrichtung (22) in einem äußeren Strömungskanal (21) angeordnet ist, und der $trömungskörper (3) in der Richtungseinstellvorrichtung (22) entlang der Mittellängsachse des inneren Strömungskanals (2) ausgebildet ist.

2. Luftausströmer nach Anspruch 1, **dadurch gekennzeichnet, dass** der Strömungskörper (3) massiv mit kreisförmigem Querschnitt ausgebildet ist.

3. Luftausströmer nach einem der vorhergehenden Ansprüche, **dadurch gekennzeichnet, dass** der Strömungskörper (3) einen in Längsrichtung des Strömungskanals (2) sich über die Längsrichtung ändernden Querschnitt aufweist.

4. Luftausströmer nach einem der vorhergehenden Ansprüche, **dadurch gekennzeichnet, dass** der Strömungskanal (2; 21) einen sich über die Längsrichtung ändernden Querschnitt aufweist.

5. Luftausströmer nach einem der vorhergehenden Ansprüche, **dadurch gekennzeichnet, dass** das Luftleitelement (4) wendelförmig ausgebildet ist.

6. Luftausströmer nach Anspruch 5, **dadurch gekennzeichnet, dass** das Luftleitelement (4) eine konstante Ganghöhe aufweist.

7. Luftausströmer nach Anspruch 5, **dadurch gekennzeichnet, dass** das Luffleitelement (4) eine abnehmende oder zunehmende Ganghöhe aufweist.

8. Luftausströmer nach einem der vorhergehenden Ansprüche, **dadurch gekennzeichnet, dass** sich der äußere Strömungskanal (21) in Luftströmungsrichtung gesehen in seinem Querschnitt erweitert.

9. Luftausströmer nach einem der vorhergehenden Ansprüche, **dadurch gekennzeichnet, dass** alle Schwenkachsen der Richtungseinstellvorrichtung (22) mittig bezüglich der Längserstreckung des inneren Strömungskanals (2) angeordnet sind.

## Claims

1. An air diffuser, in particular for a motor vehicle, having at least one air-guiding element (4) which is arranged in a flow duct (2) and imparts a swirl to the air stream as it passes from an air duct into the air diffuser (1), wherein a flow body (3) is formed along the longitudinal center axis of the flow duct (2), **characterized in that** the air diffuser (1) has a direction-setting device (22) that is arranged in an outer flow duct (21) and wherein the flow body (3) is formed in the direction-setting device (22) along the longitudinal center axis of the inner flow duct (2)

2. The air diffuser as claimed in claim 1, **characterized in that** the flow body (3) is of solid configuration with a circular cross section.

3. The air diffuser as claimed in one of the preceding claims, **characterized in that** the flow body (3), in the longitudinal direction of the flow duct (2), has a cross section which changes over the longitudinal direction.

4. The air diffuser as claimed in one of the preceding claims, **characterized in that** the flow duct (2; 21) has a cross section which changes over the longitudinal direction.

5. The air diffuser as claimed in one of the preceding claims, **characterized in that** the air-guiding element (4) is of helical configuration.

6. The air diffuser as claimed in claim 5, **characterized in that** the air-guiding element (4) has a constant pitch.

7. The air diffuser as claimed in claim 5, **characterized in that** the air-guiding element (4) has a decreasing or increasing pitch.

8. The air diffuser as claimed in one of the preceding claims, **characterized in that** the cross section of the outer flow duct (21) widens as seen in the direction of air flow.

9. The air diffuser as claimed in one of the preceding claims, **characterized in that** all the pivot axes of the direction-setting device (22) are arranged centrally with respect to the longitudinal extent of the inner flow duct (2).

## Revendications

1. Diffuseur d'air, en particulier pour un véhicule automobile, comprenant au moins un élément déflecteur d'air (4) disposé dans un conduit d'écoulement (2), élément déflecteur d'air qui, au niveau de l'entrée dans le diffuseur d'air (1), en provenance d'un conduit d'air, impose un tourbillon au flux d'air, où un corps d'écoulement (3) est formé le long de l'axe longitudinal médian du conduit d'écoulement (2),
**caractérisé en ce que** le diffuseur d'air (1) présente un dispositif de réglage de direction (22), où le dispositif de réglage de direction (22) est disposé dans un conduit d'écoulement extérieur (21), et le corps d'écoulement (3) est formé, dans le dispositif de réglage de direction (22), le long de l'axe longitudinal médian du conduit d'écoulement intérieur (2).

2. Diffuseur d'air selon la revendication 1, **caractérisé en ce que** le corps d'écoulement (3) est configuré de façon massive, en ayant une section de forme circulaire.

3. Diffuseur d'air selon l'une ou l'autre des revendications précédentes, **caractérisé en ce que** le corps d'écoulement (3) présente une section se modifiant dans le sens longitudinal, dans le sens longitudinal du conduit d'écoulement (2).

4. Diffuseur d'air selon l'une quelconque des revendications précédentes, **caractérisé en ce que** le conduit d'écoulement (2 ; 21) présente une section se modifiant dans le sens longitudinal.

5. Diffuseur d'air selon l'une quelconque des revendications précédentes, **caractérisé en ce que** l'élément déflecteur d'air (4) est configuré en ayant une forme hélicoïdale.

6. Diffuseur d'air selon la revendication 5, **caractérisé en ce que** l'élément déflecteur d'air (4) présente un pas hélicoïdal constant.

7. Diffuseur d'air selon la revendication 5, **caractérisé en ce que** l'élément déflecteur d'air (4) présente un pas hélicoïdal diminuant ou augmentant.

8. Diffuseur d'air selon l'une quelconque des revendications précédentes, **caractérisé en ce que** le conduit d'écoulement extérieur (21), vu dans la direction d'écoulement de l'air, s'élargit dans sa section.

9. Diffuseur d'air selon l'une quelconque des revendications précédentes, **caractérisé en ce que** tous les axes de pivotement du dispositif de réglage de direction (22) sont disposés au milieu par rapport à la dimension longitudinale du conduit d'écoulement intérieur (2).
